(19) Europäisches Patentamt / European Patent Office / Office européen des brevets

(11) EP 3 371 626 B1

(12) **FASCICULE DE BREVET EUROPEEN**

(45) Date de publication et mention de la délivrance du brevet:
**04.12.2019 Bulletin 2019/49**

(21) Numéro de dépôt: **16806246.1**

(22) Date de dépôt: **03.11.2016**

(51) Int Cl.:
***G01T 1/204*** *(2006.01)*

(86) Numéro de dépôt international:
**PCT/FR2016/052849**

(87) Numéro de publication internationale:
**WO 2017/077241 (11.05.2017 Gazette 2017/19)**

(54) **PROCÉDÉ DE MESURE EN SCINTILLATION LIQUIDE, UTILISATION, COMPOSITION ET KIT ASSOCIÉS**

FLÜSSIGSZINTILLATIONSZÄHLVERFAHREN UND ZUGEHÖRIGE VERWENDUNG, ZUSAMMENSETZUNG UND KIT

LIQUID SCINTILLATION COUNTING METHOD AND ASSOCIATED USE, COMPOSITION AND KIT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.11.2015 FR 1560593**

(43) Date de publication de la demande:
**12.09.2018 Bulletin 2018/37**

(73) Titulaire: **Commissariat à l'Énergie Atomique et aux Énergies Alternatives**
**75015 Paris (FR)**

(72) Inventeurs:
- **HAMEL, Matthieu**
  **50100 Cherbourg-Octeville (FR)**
- **BERTRAND, Guillaume**
  **07380 Meyras (FR)**
- **SGUERRA, Fabien**
  **06700 Saint-laurent Du Var (FR)**

(74) Mandataire: **Dennemeyer & Associates S.A.**
**Postfach 70 04 25**
**81304 München (DE)**

(56) Documents cités:
**US-A1- 2006 046 172**

- **E R Gaerttner ET AL: "LETTE RS TO THE E D ITOR Pair Production in the Field of the Electron by X-Rays from a 100-Mev Betatron~", , 13 mars 1950 (1950-03-13), XP055344217, Extrait de l'Internet: URL:http://journals.aps.org/pr/pdf/10.1103 /PhysRev.78.621.2 [extrait le 2017-02-09]**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 371 626 B1

## Description

### DOMAINE TECHNIQUE

La présente invention appartient au domaine de la mesure de la radioactivité par la technique de scintillation liquide.

L'invention concerne plus particulièrement un procédé de mesure par scintillation liquide, ainsi que l'utilisation, la composition de scintillation liquide et le kit prêt à l'emploi associés.

### ARRIERE-PLAN TECHNIQUE

La mesure par scintillation liquide consiste à déterminer la présence et/ou la quantité d'une ou plusieurs matières radioactives, notamment en physique, géologie, biologie, médecine, pour la datation, la surveillance l'environnement ou le contrôle de la non-prolifération des armes nucléaires.

Cette méthode de mesure est décrite par exemple dans le document « Techniques de l'ingénieur, Mesures de radioactivité par scintillation liquide, Référence p2552, publication du 10/03/2004 ».

En outre, US 2006/046172 décrit l'utilisation d'un mélange d'un polymère organique contenant du (2-ethylhexyl)carbazole et un éther couronne afin de produire un organophotorecepteur pour une utilisation en électrophotographie.

En pratique, la matière radioactive émettant un rayonnement ionisant ou une particule ionisante (particule alpha, électron, positon, photon, neutron,...) est exposée à une composition chimique scintillante dite « scintillateur liquide » qui convertit le dépôt énergétique issu de l'interaction rayonnement/matière en un rayonnement lumineux (dit radioluminescent) mesurable par un convertisseur photon-électron à gain, comme par exemple un photomultiplicateur.

Le scintillateur liquide est connu depuis le milieu du XX$^{ème}$ siècle. Il se présente généralement sous forme d'une composition de scintillation liquide comprenant un scintillateur primaire, éventuellement un fluorophore secondaire (voire plus particulièrement un scintillateur secondaire), et un solvant organique apolaire.

Les scintillateurs primaire ou secondaire sont constitués d'une molécule aromatique aux propriétés fluorescentes (molécule dite fluorophore).

Suite à son exposition à la matière radioactive, les molécules du solvant organique apolaire sont ionisées, puis après recombinaison, produisent des espèces excitées qui émettent un rayonnement radioluminescent. Par transfert d'énergie, ce rayonnement est transmis au scintillateur primaire qui peut le transmettre lui-même au fluorophore secondaire afin d'augmenter la longueur d'onde du rayonnement et améliorer la détection. Le cas échéant, lorsque le fluorophore secondaire a en outre des propriétés scintillantes, il constitue un scintillateur secondaire.

Une telle composition de scintillation liquide pose au moins un des problèmes suivants :

- une inflammabilité due à un point éclair faible. Par exemple, la composition BC-501A commercialisée en quantités importantes par la société Saint-Gobain a un point éclair de 24 °C ;
- un caractère irritant, voire toxique ;
- un transfert des photons entre le solvant et le scintillateur secondaire qui n'est pas optimum, notamment à cause d'un phénomène de « quenching », ce qui dégrade la sensibilité et la qualité de la mesure par scintillation liquide ;
- la difficulté à déterminer la composition du mélange complexe de fluorophores primaire et secondaire afin que son centroïde du rayonnement de radioluminescence se situe de manière optimale entre 380 nm et 450 nm et/ou le décalage de Stokes soit le plus grand possible ;
- une stabilité chimique qui se dégrade dans le temps ou en présence d'oxygène, ce qui nécessite un conditionnement et un stockage dans des conditions très strictes ;
- une réponse intrinsèque qui dépend des gaz solubilisés dans le liquide, en particulier de l'oxygène de l'air, ce qui impose de soumettre fréquemment la composition à des bullages de gaz inerte pour éviter le phénomène de quenching qui diminue le rendement de fluorescence et dégrade la mesure par scintillation liquide ;
- un coefficient d'expansion élevé qui peut provoquer une augmentation importante du volume avec la température ;
- un coût de fabrication insuffisamment compétitif ;
- une évaporation du solvant qui modifie le rapport molaire entre solvant et fluorophores, et donc la composition chimique et les propriétés du scintillateur liquide, ce qui contraint le plus souvent à travailler en système clos.

Afin de tenter de résoudre ces problèmes, différentes compositions de scintillation liquide ont été proposées, comprenant notamment des solvants non-aromatiques ou à base d'hydrocarbures, voire comprenant des solvants aqueux.

Le document « M. Dalla Palma et al., Optical Materials, 2015, 42, 111-117 » propose par exemple une nouvelle composition pour scintillation liquide qui comprend du 2,5-diphenyloxazole en tant que scintillateur primaire, du Lumogen

Violet® en tant que fluorophore secondaire et des polysiloxanes en tant que solvant amélioré.

Néanmoins, le plus souvent, les compositions de scintillation liquide de l'état de la technique présentent encore au moins un des inconvénients exposés ci-dessus.

## EXPOSE DE L'INVENTION

Un des buts de l'invention est donc d'éviter ou d'atténuer un ou plusieurs des inconvénients décrits ci-dessus, en proposant un procédé de mesure par scintillation liquide utilisant un dérivé spécifique du carbazole.

La présente invention concerne ainsi un procédé de mesure par scintillation liquide, le procédé comprenant les étapes successives suivantes :

a) un scintillateur liquide comprenant du *N*-(2-éthylhexyl)carbazole, et dans lequel la forme monomère du *N*-(2-éthylhexyl)carbazole est spontanément en équilibre physico-chimique avec la forme exciplexe, est exposé à une matière radioactive, afin que le scintillateur liquide émette un rayonnement radioluminescent ; et

b) le rayonnement radioluminescent est mesuré.

Le procédé de l'invention se caractérise notamment par l'utilisation d'une molécule spécifique qui est le *N*-(2-éthylhexyl)carbazole, également connu sous l'abréviation « EHCz » et dont la formule générale (I) est :

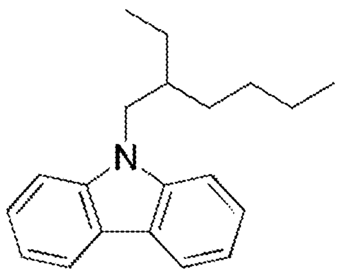

(I)

À contre-courant des voies d'amélioration suivies par l'état de la technique, l'invention ne consiste pas en l'utilisation d'un nouveau solvant afin de pallier aux inconvénients précités, mais adopte une démarche novatrice en s'affranchissant de l'utilisation impérative d'un solvant et/ou d'un fluorophore secondaire (en particulier un fluorophore émettant dans la lumière UV ou violette). L'ensemble des caractéristiques nécessaires au scintillateur liquide selon le procédé de mesure de l'invention est ainsi réuni dans la seule molécule de *N*-(2-éthylhexyl)carbazole, qui remplit les fonctions combinées de scintillateur primaire, fluorophore secondaire et solvant.

Éventuellement, le scintillateur liquide peut néanmoins contenir une ou plusieurs matières n'ayant pas d'impact significatif sur le procédé de mesure de l'invention.

La simplicité de composition et de mise en œuvre du scintillateur liquide selon l'invention a notamment pour avantage qu'elle limite voire supprime les opérations de préparation du scintillateur liquide, et donc le risque de la présence d'impuretés telles que des espèces chimiques ayant un effet néfaste sur la mesure par scintillation, comme par exemple un effet limitant. Elle a aussi pour avantage qu'elle diminue voire élimine la difficulté à déterminer la proportion adéquate entre le fluorophore primaire et secondaire en vue d'obtenir un rayonnement de radioluminescence et/ou un décalage de Stokes qui sont optimisés.

Par ailleurs, avantageusement, le *N*-(2-éthylhexyl)carbazole a un point éclair élevé de 170 °C, une bonne stabilité chimique, un coût de fabrication modéré, et ne présente pas de perméabilité aux gaz significative.

Le *N*-(2-éthylhexyl)carbazole peut spontanément former un exciplexe, à savoir l'association d'au moins deux monomères identiques qui n'existe qu'à l'état excité, et plus particulièrement un excimère qui est un exciplexe formé de seulement deux monomères identiques. La forme exciplexe peut donc comprendre plusieurs types d'exciplexes qui coexistent, par exemple un exciplexe avec deux monomères identiques et un exciplexe avec trois monomères identiques.

Une concentration élevée en *N*-(2-éthylhexyl)carbazole favorise la forme exciplexe de cette molécule par rapport à la forme monomère avec laquelle elle est spontanément en équilibre physico-chimique et qui est alors en concentration minoritaire. Pour une telle concentration, le maximum du spectre d'émission en fluorescence du *N-(2*-éthylhexyl)carbazole est avantageusement centré ou proche de 420 nm. Cette longueur d'onde est particulièrement adaptée à la détection, par les photomultiplicateurs actuels, du signal issu du rayonnement radioluminescent, ce qui améliore la sensibilité du procédé de mesure de l'invention.

Le scintillateur liquide utilisé dans le procédé de mesure de l'invention comprend du *N*-(2-éthylhexyl)carbazole, dont une proportion éventuellement importante se trouve sous forme d'exciplexe. Une telle caractéristique est inattendue au regard des connaissances généralement admises par l'homme du métier qui considère qu'un exciplexe peut difficilement émettre de la lumière, ce qui est néfaste au processus de scintillation : le document précité « M. Dalla Palma et al., Optical Materials, 2015, 42, 111-117 » spécifie par exemple que la formation d'excimère (et donc plus généralement d'exciplexe) doit être évitée au mieux afin notamment de favoriser les transferts d'énergie nécessaire à une bonne mesure par scintillation liquide, notamment les transferts par interaction de type Forster.

Selon un mode de réalisation préférentiel, le scintillateur liquide est dépourvu de solvant, voire il consiste en le *N*-(2-éthylhexyl)carbazole, à savoir sous forme pure ou quasiment pure.

Toutefois, le *N*-(2-éthylhexyl)carbazole a également pour propriété avantageuse qu'il est miscible sur une large gamme de concentration dans nombre de solvants.

Optionnellement, afin d'en diminuer la viscosité et en faciliter la manipulation, le scintillateur liquide peut donc comprendre un solvant usuellement utilisé en scintillation liquide, à savoir généralement un solvant organique apolaire.

Néanmoins, une proportion élevée de N-(2-éthylhexyl)carbazole dans le scintillateur liquide favorise généralement les propriétés avantageuses précitées qui se rapprochent alors de celles du scintillateur liquide optimal consistant en le *N*-(2-éthylhexyl)carbazole. En particulier, comme montré ci-après, la dilution de la molécule de *N*-(2-éthylhexyl)carbazole dans un solvant peut provoquer un déplacement hypsochrome qui est défavorable, dans la mesure où l'amplitude maximale de la longueur d'onde d'émission du *N*-(2-éthylhexyl)carbazole s'éloigne alors de celle de 420 nm obtenue pour la molécule pure.

Un compromis peut alors être trouvé entre la viscosité du scintillateur liquide et ses autres propriétés, notamment ses propriétés photophysiques.

Ainsi, selon un mode de réalisation particulier du procédé de mesure de l'invention, la proportion de solvant est réduite, de telle sorte que le scintillateur liquide comprend une quantité de solvant organique apolaire telle que le centroïde du rayonnement radioluminescent est centré à une longueur d'onde comprise entre 380 nm et 450 nm. Dans la présente description, le centroïde désigne la longueur d'onde pour le milieu de la largeur à mi-hauteur de la bande principale du rayonnement radioluminescent. Alternativement, la proportion réduite de solvant est telle que le scintillateur liquide peut comprendre en pourcentage volumique de 0,1 % à 75 % du solvant organique apolaire, voire de 5 % à 50 % du solvant organique apolaire.

Préférentiellement, le solvant organique apolaire est un solvant aromatique, un solvant aliphatique, ou leur mélange.

Le solvant aromatique peut être un solvant aromatique comprenant un ou deux cycles aromatiques. Il est de préférence choisi parmi le xylène, le toluène, le pseudocumène, le phénylxylyéthane, le dodécylbenzène (dit LAB pour « Linear Alkyl Benzene ») notamment l'un de ses isomères de position, le diisopropylnaphtalène, l'isopropylbiphényle, le benzène, la tétraline, leur(s) isomère(s) liquide(s) ou leurs mélanges. Préférentiellement, le solvant aromatique est le xylène.

Le solvant aliphatique peut être choisi parmi un alcane, linéaire ou ramifié, cyclique (cycloalcane) ou acyclique, leurs isomères, ou leurs mélanges tels que par exemple une huile minérale.

Plus particulièrement, le solvant aliphatique peut être choisi parmi le pentane, l'hexane, le cyclohexane, l'heptane, l'octane, le nonane, le décane, l'undécane, le dodécane, une huile de paraffine, ou leur(s) isomère(s).

En outre, d'autres solvants communément utilisés en chimie organique peuvent également être ajoutés au *N*-(2-éthylhexyl)carbazole, comme par exemple le dioxane ou un de ses isomères, le dichlorométhane, le chloroforme, le tétrachlorure de carbone, l'acétonitrile, ou leurs mélanges.

Préférentiellement, le solvant aliphatique est le cyclohexane ou le dichlorométhane.

Le cas échéant, le scintillateur liquide peut comprendre au moins un composé supplémentaire choisi parmi un absorbant neutronique, un surfactant ou un extractant (dit également agent de transfert de phase), tels que ceux généralement utilisés en scintillation liquide.

Un absorbant neutronique a pour effet de détecter des neutrons thermiques par capture radiative.

Un surfactant a pour effet de solubiliser au moins deux liquides qui ne sont pas totalement miscibles entre eux.

Un extractant a pour effet de solubiliser un solide dans un liquide dans lequel il n'est pas totalement soluble.

Chacun de ces effets est obtenu par synergie en combinant le *N*-(2-éthylhexyl)carbazole qui coopère avec le composé supplémentaire associé à cet effet.

Le scintillateur liquide peut comprendre en pourcentage volumique de 0,1 % à 6 % d'absorbant neutronique, de 0,1 % à 20 % de surfactant, et/ou de 0,1 % à 5 % d'extractant.

L'absorbant neutronique comprend généralement une espèce chimique minérale. Il peut être choisi parmi au moins un complexe organométallique, typiquement au moins un complexe organométallique du lithium, du gadolinium, du bore, du cadmium ou un mélange de ces complexes, à savoir un mélange de complexes comprenant une espèce minérale identique ou différente.

Le complexe organométallique du lithium est par exemple le salicylate de lithium et/ou le phénylsalicylate de

lithium.

Le complexe organométallique du gadolinium est par exemple choisi parmi le tris(tétraméthylheptanedionate) de gadolinium, un tricarboxylate de gadolinium ou le tris(acétylacétonate) de gadolinium ($Gd(acac)_3$). Sa concentration dans le scintillateur liquide est par exemple comprise entre 0,2 % molaire et 2,5 % molaire, en référence au nombre de moles de gadolinium.

Le complexe organométallique de bore est par exemple l'*ortho*-carborane, le *para*-carborane ou le *méta*-carborane. Sa concentration dans le scintillateur liquide est par exemple comprise entre 1 % molaire et 6 % molaire.

Le surfactant est par exemple choisi parmi l'iso-octylphenoxy-polyethoxyéthanol (dit « Triton X-100 »), un ester de sorbitane polyoxyéthylénique (couramment appelé « Tween » ou polysorbate) ou leurs mélanges.

L'extractant peut être choisi parmi l'acide di-2-éthylhexylphosphorique (HDEHP), le tributylphosphate, le tri-n-octylphosphine (TOPO), un éther couronne tel que par exemple le « 18-crown-6 », ou leurs mélanges.

La matière radioactive à laquelle est exposé le scintillateur liquide peut être émettrice de rayons gamma, rayons X, particules bêta, particules alpha, ou neutron. Le cas échéant, la matière radioactive peut émettre plusieurs types de rayonnements ionisants ou de particules ionisantes.

Le rayonnement radioluminescent qui résulte de cette exposition peut être mesuré selon l'étape b) avec un photodétecteur, tel que par exemple un photodétecteur choisi parmi un photomultiplicateur, une caméra à transfert de charge (dite CCD pour « Charge-Coupled Device caméra » en anglais), un capteur CMOS (pour « Complementary Metal-Oxide Semiconductor » en anglais), ou tout autre détecteur de photon dont la capture est convertie en signal électrique.

Selon un mode de réalisation préférentiel de l'invention, le procédé de mesure peut comprendre une étape c) dans laquelle on détermine la présence et/ou la quantité de la matière radioactive à partir de la mesure du rayonnement radioluminescent selon l'étape b), comme cela est pratiqué usuellement en scintillation liquide.

La détermination quantitative peut notamment mesurer l'activité de la source radioactive. Elle peut être réalisée à partir d'une courbe de calibration.

Cette courbe peut par exemple corréler le nombre de photons provenant du rayonnement radioluminescent émis pour une matière radioactive connue avec l'énergie du rayonnement incident pour cette matière radioactive. A partir de l'angle solide, de la distance par rapport à la source radioactive, et de l'activité détectée par le procédé de mesure par scintillation liquide selon l'invention, il est alors possible de quantifier l'activité de la source radioactive.

L'invention concerne également l'utilisation en tant que scintillateur liquide primaire d'un scintillateur liquide tel que défini précédemment selon une ou plusieurs des variantes décrites dans la présente description pour le procédé de mesure de l'invention, notamment dans une ou plusieurs des variantes décrites qui concernent la composition et/ou proportion du scintillateur liquide, du solvant qu'il peut contenir et/ou du composé supplémentaire.

L'invention concerne également une composition de scintillation liquide, spécialement conçue pour la mise en œuvre du procédé de mesure selon l'invention.

La composition de scintillation liquide selon l'invention comprend i) un scintillateur liquide et ii) un composé supplémentaire tel que défini dans la présente description du procédé de mesure de l'invention, notamment dans une ou plusieurs des variantes décrites qui concernent la composition et/ou proportion du scintillateur liquide, du solvant qu'il peut contenir et/ou du composé supplémentaire.

L'invention concerne également un kit prêt à l'emploi pour la fabrication de la composition telle que définie dans la présente description, notamment dans une ou plusieurs des variantes décrites qui concernent la composition et/ou proportion du scintillateur liquide, du solvant et/ou du composé supplémentaire.

Le kit comprenant séparément i) le scintillateur liquide et ii) le composé supplémentaire (voire éventuellement le solvant organique apolaire) peut être assemblé, en vue de la fabrication ultérieure de la composition de scintillation liquide de l'invention, en vue notamment d'une utilisation simultanée, séparée ou étalée dans le temps.

Selon un mode de réalisation préférentiel de l'invention, le kit comprend :

- un premier compartiment contenant I) le scintillateur liquide comprenant du *N-(2*-éthylhexyl)carbazole, et dans lequel la forme monomère du *N*-(2-éthylhexyl)carbazole est spontanément en équilibre physico-chimique avec la forme exciplexe ;
- un deuxième compartiment contenant II) le composé supplémentaire choisi parmi un absorbant neutronique, un surfactant ou un extractant.

Il peut éventuellement en outre comprendre un troisième compartiment contenant III) le solvant organique apolaire.

## EXPOSE DETAILLE DE L'INVENTION

Dans la présente description de l'invention, un verbe tel que « comprendre », « incorporer », « inclure » et ses

formes conjuguées sont des termes ouverts et n'excluent donc pas la présence d'élément(s) et/ou étape(s) additionnels s'ajoutant aux élément(s) et/ou étape(s) initiaux énoncés après ces termes. Toutefois, ces termes ouverts visent en outre un mode de réalisation particulier dans lequel seul(s) le(s) élément(s) et/ou étape(s) initiaux, à l'exclusion de tout autre, sont visés ; auquel cas le terme ouvert vise en outre le terme fermé « consister en », « constituer de » et ses formes conjuguées.

L'usage de l'article indéfini « un » ou « une » pour un élément ou une étape n'exclut pas, sauf mention contraire, la présence d'une pluralité d'éléments ou étapes.

Par ailleurs, sauf indication contraire :

- les valeurs aux bornes sont incluses dans les gammes de paramètres indiquées ;
- les températures indiquées sont considérées pour une mise en œuvre à pression atmosphérique ;
- tout pourcentage volumique se réfère au volume total du scintillateur liquide.

La molécule de *N*-(2-éthylhexyl)carbazole est désignée ci-après sous l'abréviation « EHCz ».

D'autres objets, caractéristiques prises seules ou selon l'une quelconque de leurs combinaisons, ainsi que des avantages de l'invention vont maintenant être précisés dans la description qui suit de modes de réalisation particuliers de l'invention, donnés à titre illustratif et non limitatif, en référence aux Figures 1 à 5 annexées.

**BREVE DESCRIPTION DES FIGURES**

La Figure 1 représente la superposition du spectre d'absorption (spectre 1a) et d'émission (spectre 1b) lumineuse de la molécule d'EHCz. L'intensité exprimée dans une unité arbitraire est fonction de la longueur d'onde de la lumière absorbée ou émise exprimée en nanomètres.

La Figure 2 représente le spectre d'émission en fluorescence de la molécule d'EHCz à diverses concentrations dans le dichlorométhane. L'intensité exprimée dans une unité normalisée est fonction de la longueur d'onde de la lumière émise exprimée en nanomètres.

La Figure 3 représente le spectre d'émission en radioluminescence pour la molécule d'EHCz (courbe 3a) et le scintillateur liquide commercial BC-501A (courbe 3b). L'intensité exprimée en coups/secondes est fonction de la longueur d'onde de la lumière émise exprimée en nanomètres.

La Figure 4 représente un histogramme en énergie obtenu après irradiation par une source de césium-137, pour la molécule d'EHCz (courbe 4a) et le scintillateur liquide commercial BC-501A (courbe 4b). L'amplitude en ordonnée est exprimée en unité arbitraire. Elle est fonction de l'intégration de l'impulsion en abscisse exprimée en volt.nanoseconde qui est émise par l'EHCz suite à l'irradiation.

La Figure 5 représente le spectre d'émission en radioluminescence de la molécule d'EHCz à différentes concentrations dans le xylène. L'intensité exprimée en coups/secondes est fonction de la longueur d'onde de la lumière émise exprimée en nanomètres.

**EXPOSE DE MODES DE REALISATION PARTICULIERS**

Les exemples sont réalisés à pression atmosphérique et température ambiante.

Les spectres d'absorption sont mesurés avec un spectrophotomètre UV/visible.

Les spectres d'émission en fluorescence, en radioluminescence et les expériences de TCSPC sont réalisés avec un spectrofluorimètre.

**1. Synthèse de la molécule d'EHCz.**

La molécule d'EHCz est disponible commercialement sous le numéro de registre CAS [187148-77-2].

Elle peut être obtenue par réaction nucléophile du carbazole préalablement déprotonné, avec le bromure de 2-éthylhexyle, selon le schéma réactionnel suivant :

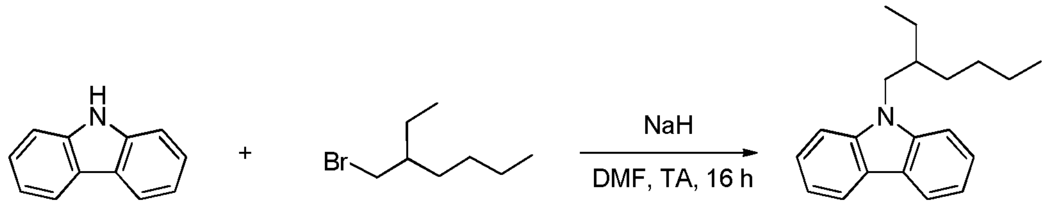


Dans un ballon de 500 mL maintenu sous atmosphère d'argon, le carbazole est ajouté par portions à une suspension d'hydrure de sodium, préalablement nettoyé de son huile minérale par le pentane, dans du *N,N*-diméthylformamide (DMF) sec. Après 30 minutes d'agitation, le bromure de 2-éthylhexyle est ajouté lentement.

Le mélange obtenu est agité pendant 16 heures à température ambiante.

De l'eau est ajoutée au mélange, puis le produit brut est extrait à l'éther éthylique. La phase organique est séchée, concentrée puis purifiée par chromatographie sur gel de silice.

La molécule d'EHCz obtenue est une huile incolore. Le rendement molaire est d'environ 73 % pour 20 g d'EHCz synthétisé.

Les caractéristiques du spectre RMN du proton de la molécule d'EHCz sont les suivantes : RMN $^1H$ ($CDCl_3$, 500 MHz) $\delta$ 0,86 (t, 3H, $^3J$ 7,3); 0,91 (t, 3H, $^3J$ 7,3); 1,21 - 1,43 (m, 8H); 2,07 (sept, 1H, $^3J$ 6,7); 4,10 - 4,21 (m, 2H); 7,39 (d, 4H, $^3J$ 8,2); 7,45 (dt, 4H, $^3J$ 6,9, $^4J$ 1,1).

## 2. Caractéristiques physico-chimiques de la molécule d'EHCz.

Sous sa forme pure, les propriétés de l'EHCz sont les suivantes :

- liquide transparent incolore ;
- indice de réfraction de 1,64 à 404 nm ;
- fluorescence centrée vers 420 nm ;
- point éclair élevé de 170 °C ;
- état liquide visqueux à température ambiante ;
- bonne stabilité en température, dans le temps et à l'oxygène.

## 3. Propriétés photophysiques de la molécule d'EHCz pour la mesure par scintillation liquide.

### 3.1. Propriétés en absence d'irradiation.

Le décalage de Stokes exprimé en $cm^{-1}$ est la différence entre le nombre d'onde du maximum de la bande d'absorption et celui du maximum du spectre d'émission par fluorescence. Pour obtenir un bon scintillateur liquide au rendement de scintillation satisfaisant, le décalage de Stokes doit être le plus grand possible, ce qui signifie que le recouvrement entre les spectres d'absorption et d'émission est réduit voire nul, ce qui évite une perte de photons ou leur propre absorption par le fluorophore.

La Figure 1 montre que l'absence de recouvrement entre les spectres d'absorption et d'émission de la molécule d'EHCz est favorable à son utilisation en scintillation liquide, puisque la molécule d'EHCz est transparente à sa propre lumière. Le décalage de Stokes est de 10150 $cm^{-1}$ en calculant la différence de longueur d'onde entre le centroïde du spectre d'émission et le pic à 293 nm du spectre d'absorption.

Le spectre d'émission en fluorescence montre deux maxima à 417 nm et 434 nm, donc parfaitement adaptés aux courbes d'efficacité quantique des photocathodes de photomultiplicateur.

L'efficacité quantique est mesurée avec le photomultiplicateur utilisé dans la présente description (modèle H1949-51 commercialisé par la société Hamamatsu). Elle est calculée d'après les équations suivantes :

$$N_{pe^-} = \int_{200}^{700} I(\lambda) \times q_e(\lambda) d\lambda \qquad \text{équation (1)}$$

$$\eta_Q = \frac{N_{pe^-}}{\int I(\lambda) d\lambda} \qquad \text{équation (2)}$$

, dans lesquelles « I » est l'intensité lumineuse en radioluminescence à la longueur d'onde lambda ($\lambda$), « $q_e$ » l'efficacité quantique de la photocathode du photomultiplicateur, « $N_{pe-}$ » le nombre de photoélectrons.

Les valeurs obtenues pour la molécule d'EHCz, et à titre comparatif le scintillateur liquide commercial BC-501A, sont les suivantes :

| Scintillateur | $N_{pe^-}$ | $\eta_Q$ (%) |
|---|---|---|
| EHCz | 366460 | 20,99 |
| BC-501A | 631590 | 22,26 |

L'étude par photoluminescence résolue en temps (ou « TCSPC » en anglais pour « Time Correlated Single Photon Counting ») de la décroissance de la fluorescence montre une décroissance monoexponentielle de 30 nanosecondes. La molécule de l'EHCz est donc un scintillateur liquide rapide.

Le rendement quantique de fluorescence correspond au rapport entre le nombre de photons émis et le nombre de photons absorbés. Il mesure l'efficacité relative de la fluorescence comparée aux autres voies de désexcitation.

Il est calculé à partir de 3 solutions avec une concentration variable d'EHCz dans le dichlorométhane pour lesquelles un spectre d'émission en fluorescence est représenté sur la Figure 2 :

- EHCz pur (spectre 2a),
- 0,01 mole/litre (spectre 2b),
- $1.10^{-4}$ moles/litre (spectre 2c).

À partir de ces spectres, le rendement quantique de fluorescence est évalué à 0,70 $\pm$ 0,02. Cette valeur élevée montre que la molécule d'EHCz peut se substituer aux fluorophores classiquement utilisés en scintillation liquide.

La Figure 2 indique également que, sous l'influence de la dilution dans le dichlorométhane, le spectre d'émission de la molécule d'EHCz est déplacé vers les longueurs d'onde plus faibles : ce déplacement hypsochrome traduit la diminution de la concentration de molécules d'EHCz sous forme d'exciplexe en faveur de la forme monomère avec laquelle elle est en équilibre physico-chimique.

Les spectres d'absorption correspondants (non montrés ici) indiquent également que le décalage de Stokes est d'environ 5720 $cm^{-1}$ pour une concentration d'EHCz de $1.10^{-4}$ moles/litres dans le dichlorométhane, ce qui milite en faveur de l'utilisation de la molécule d'EHCz à forte concentration.

Par ailleurs, comme illustré par le Tableau 1, la dilution de l'EHCz dans un solvant n'affecte pas sensiblement les longueurs d'onde d'émission du scintillateur liquide comprenant 0,01 mole/litre d'EHCz dans le dichlorométhane. Par contre, le temps de vie de photoluminescence est réduit à 11 nanosecondes, ce qui a pour avantage de rendre ce scintillateur encore plus rapide et permettre d'accéder à des taux de comptage élevés.

Tableau 1

| Composition du scintillateur liquide | Longueurs d'onde d'émission [nm] | Temps de vie d'émission [ns] |
|---|---|---|
| EHCz pur | 417 ; 434 | 30 |
| $10^{-2}$ M EHCz dans $CH_2Cl_2$ | 386 ; 401 | 11 |
| $10^{-4}$ M EHCz dans $CH_2Cl_2$ | 351 ; 367 | 7 |

### 3.2. Propriétés sous irradiation.

#### 3.2.1. Irradiation avec une source bêta.

La molécule d'EHCz est irradiée par une source bêta $^{90}Sr/^{90}Y$ de 25 MBq.

Le spectre d'émission de radioluminescence obtenu (3a) est représenté sur la Figure 3. Il est centré à environ 430 nm et sa largeur à mi-hauteur est de 57 nm.

Ces valeurs sont proches de celles du scintillateur liquide commercial BC-501A (420 nm / 60 nm) dont le spectre d'émission (3b) obtenu dans les mêmes conditions est également représenté sur la Figure 3.

#### 3.2.2. Irradiation avec une source gamma.

Dans un environnement protégé de la lumière, des cuvettes en quartz sont couplées optiquement avec une graisse optique Rhodorsil à un photomultiplicateur alimenté en haute tension. Elles contiennent différents échantillons liquides de 3 ml composés de la molécule d'EHCz ou de scintillateurs liquides connus (BC-501A, 4-isopropylbiphényle ou 1-méthylnaphtalène).

Après irradiation par une source gamma de $^{137}Cs$ de 206 kBq placée à 5 cm de chaque scintillateur liquide, l'impulsion de scintillation obtenue est convertie puis amplifiée en signal électronique. Elle est ensuite enregistrée puis numérisée grâce à un oscilloscope numérique.

Le signal obtenu est soumis à la séquence de traitement suivante : inversion du signal pour le rendre positif, lissage, intégration du signal sur le temps, répartition de la valeur par histogramme, puis soustraction du signal obtenu dans les mêmes conditions sans scintillateur liquide afin de supprimer le bruit de fond résiduel.

Les histogrammes en énergie propres à chaque scintillateur liquide sont représentés sur la Figure 4. Ils sont caractéristiques d'une interaction Compton entre une source gamma incidente et un scintillateur liquide.

La Figure 4 montre que la position du front Compton de la molécule d'EHCz est en retrait d'environ 50 % par rapport à celle du scintillateur liquide BC-501A. Le rendement lumineux de la molécule d'EHCz est donc évalué à environ 50 % de celui du BC-501A, soit 6000 ph/MeV. Une telle valeur est tout à fait compatible avec une utilisation de la molécule de l'EHCz en tant que scintillateur liquide.

**4. Propriétés photophysiques sous irradiation de la molécule d'EHCz en solution dans le xylène pour la mesure par scintillation liquide.**

Des solutions dans lesquelles la concentration de la molécule d'EHCz dans le xylène varie de 0,1 % à 50 % en volume sont irradiées avec une source bêta $^{90}Sr/^{90}Y$ de 25 MBq.

Le spectre d'émission de radioluminescence obtenu est représenté sur la Figure 5 pour les concentrations suivantes :

- 0,1 % d'EHCz dans le xylène (spectre 5a),
- 6,25 % d'EHCz dans le xylène (spectre 5 b),
- 12,5 % d'EHCz dans le xylène (spectre 5c),
- 25 % d'EHCz dans le xylène (spectre 5d),
- 50 % d'EHCz dans le xylène (spectre 5e).

Le déplacement hypsochrome sous irradiation constaté est cohérent avec celui en absence d'irradiation représenté sur la Figure 2.

La large bande d'émission à haute concentration est due à la prépondérance de la forme excimère de la molécule d'EHCz, voire éventuellement de la forme exciplexe entre la molécule d'EHCz et le xylène.

L'intégration des différents spectres d'émission de radioluminescence montre que leur surface est relativement constante quelle que soit la concentration de la molécule d'EHCz. L'intensité de la fluorescence et donc le phénomène de scintillation ne sont en conséquence pas dégradés par la formation d'un exciplexe.

Il est donc avantageux d'utiliser la molécule d'EHCz à forte concentration, voire sous forme pure, afin notamment de bénéficier de la longueur d'onde d'émission de cette molécule qui est mieux adaptée aux tubes d'un photomultiplicateur standard et sans que cela n'affecte pour autant le rendement de scintillation.

**5. Exemple de protocole pour la mesure qualitative ou quantitative d'une matière radioactive en scintillation liquide selon le procédé de mesure de l'invention.**

Un scintillateur liquide comprenant de l'EHCz préalablement saturé en gaz neutre est introduit délicatement dans une cellule en quartz. La cellule est ensuite connectée à un tube photomultiplicateur au moyen de graisse optique.

Suite à son exposition à la matière radioactive, le scintillateur liquide émet des photons de scintillation qui sont convertis en signal électrique par le tube photomultiplicateur alimenté en haute tension.

Le signal électrique est ensuite analysé avec un oscilloscope, un logiciel de spectrométrie ou une carte électronique d'acquisition.

Cette analyse aboutit à un histogramme de spectre en énergie représentant en abscisse les canaux (dérivés d'une énergie de sortie) et en ordonnée le nombre de coups. Après calibration avec une source émettrice gamma d'énergie connue, l'énergie de la matière radioactive à mesurer est déterminée.

La présente invention n'est pas limitée aux formes de réalisation décrites et représentées, et l'homme du métier saura les combiner et y apporter avec ses connaissances générales de nombreuses variantes et modifications. Plus particulièrement, conformément à la Convention sur le Brevet Européen, l'étendue de la protection conférée par le brevet européen ou par la demande de brevet européen est déterminée par les revendications. Toutefois, la description et les dessins servent à interpréter les revendications.

L'invention est applicable aux domaines où sont utilisés des scintillateurs, en particulier :

- dans le domaine industriel, par exemple pour la mesure de paramètres physiques de pièces en cours de fabrication,

pour l'inspection non destructrice de matériaux, pour le contrôle de la radioactivité aux points d'entrée et de sorties de sites et pour le contrôle de déchets radioactifs.

- dans le domaine géophysique, par exemple pour l'évaluation de la radioactivité naturelle des sols.
- dans le domaine de la physique fondamentale et, en particulier, de la physique nucléaire.
- dans le domaine de la sécurité des biens et des personnes, par exemple pour la sécurité d'infrastructures critiques, le contrôle de marchandises en circulation (bagages, conteneurs, véhicules...) ainsi que pour la radioprotection des travailleurs des secteurs industriel, nucléaire et médical.
- dans le domaine de l'imagerie médicale.

## Revendications

**1.** Procédé de mesure par scintillation liquide, le procédé comprenant les étapes successives suivantes :

a) un scintillateur liquide comprenant du *N-(2*-éthylhexyl)carbazole, et dans lequel la forme monomère du *N*-(2-éthylhexyl)carbazole est spontanément en équilibre physico-chimique avec la forme exciplexe, est exposé à une matière radioactive, afin que le scintillateur liquide émette un rayonnement radioluminescent ; et
b) le rayonnement radioluminescent est mesuré.

**2.** Procédé de mesure par scintillation liquide selon la revendication 1, dans lequel le scintillateur liquide consiste en le *N*-(2-éthylhexyl)carbazole.

**3.** Procédé de mesure par scintillation liquide selon la revendication 1, dans lequel le scintillateur liquide comprend un solvant organique apolaire.

**4.** Procédé de mesure par scintillation liquide selon la revendication 3, dans lequel le scintillateur liquide comprend une quantité de solvant organique apolaire telle que le centroïde du rayonnement radioluminescent est centré à une longueur d'onde comprise entre 380 nm et 450 nm.

**5.** Procédé de mesure par scintillation liquide selon la revendication 3 ou 4, dans lequel le scintillateur liquide comprend en pourcentage volumique de 0,1 % à 75 % du solvant organique apolaire.

**6.** Procédé de mesure par scintillation liquide selon l'une quelconque des revendications 3 à 5, dans lequel le solvant organique apolaire est un solvant aromatique, un solvant aliphatique, ou leur mélange.

**7.** Procédé de mesure par scintillation liquide selon la revendication 6, dans lequel le solvant aromatique est choisi parmi le xylène, le toluène, le pseudocumène, le phénylxylyéthane, le dodécylbenzène, le diisopropylnaphtalène, l'isopropylbiphényle, le benzène, la tétraline, leur(s) isomère(s) liquide(s) ou leurs mélanges.

**8.** Procédé de mesure par scintillation liquide selon la revendication 7, dans lequel le solvant aromatique est le xylène.

**9.** Procédé de mesure par scintillation liquide selon l'une quelconque des revendications 6 à 8, dans lequel le solvant aliphatique est choisi parmi le pentane, l'hexane, le cyclohexane, l'heptane, l'octane, le nonane, le décane, l'undécane, le dodécane, une huile de paraffine, le dioxane, le dichlorométhane, le chloroforme, le tétrachlorure de carbone, l'acétonitrile, leur(s) isomère(s) ou leurs mélanges.

**10.** Procédé de mesure par scintillation liquide selon la revendication 9, dans lequel le solvant aliphatique est le cyclohexane ou le dichlorométhane.

**11.** Procédé de mesure par scintillation liquide selon l'une quelconque des revendications précédentes, dans lequel le scintillateur liquide comprend au moins un composé supplémentaire choisi parmi un absorbant neutronique, un surfactant ou un extractant.

**12.** Procédé de mesure par scintillation liquide selon la revendication 11, dans lequel l'absorbant neutronique est choisi parmi un complexe organométallique du lithium, du bore, du cadmium, du gadolinium ou un mélange de ces complexes.

**13.** Procédé de mesure par scintillation liquide selon la revendication 11 ou 12, dans lequel le surfactant est choisi parmi

l'iso-octylphenoxy-polyethoxyéthanol, un ester de sorbitane polyoxyéthylénique ou leurs mélanges.

**14.** Procédé de mesure par scintillation liquide selon l'une quelconque des revendications 11 à 13, dans lequel l'extractant est choisi parmi l'acide di-2-éthylhexylphosphorique, le tributylphosphate, le tri-n-octylphosphine, un éther couronne, ou leurs mélanges.

**15.** Procédé de mesure par scintillation liquide selon l'une quelconque des revendications précédentes, dans lequel la matière radioactive est émettrice de rayons gamma, rayons X, particules bêta, particules alpha, ou neutron.

**16.** Procédé de mesure par scintillation liquide selon l'une quelconque des revendications précédentes, dans lequel le procédé de mesure comprend une étape c) dans laquelle on détermine la présence et/ou la quantité de la matière radioactive à partir de la mesure du rayonnement radioluminescent selon l'étape b).

**17.** Utilisation en tant que scintillateur liquide primaire d'un scintillateur liquide tel que défini dans l'une quelconque des revendications 1 à 14.

**18.** Composition de scintillation liquide comprenant i) un scintillateur liquide tel que défini dans l'une quelconque des revendications 1 à 10 et ii) un composé supplémentaire tel que défini dans l'une quelconque des revendications 11 à 14.

**19.** Kit prêt à l'emploi pour la fabrication d'une composition telle que définie selon la revendication 18, comprenant séparément en vue de leur assemblage i) le scintillateur liquide tel que défini dans l'une quelconque des revendications 1 à 10 et ii) le composé supplémentaire tel que défini dans l'une quelconque des revendications 11 à 14.

**20.** Kit selon la revendication 19, comprenant :

- un premier compartiment contenant I) le scintillateur liquide comprenant du N-(2-éthylhexyl)carbazole, et dans lequel la forme monomère du N-(2-éthylhexyl)carbazole est spontanément en équilibre physico-chimique avec la forme exciplexe ;
- un deuxième compartiment contenant II) le composé supplémentaire choisi parmi un absorbant neutronique, un surfactant ou un extractant.

**21.** Kit prêt à l'emploi pour la fabrication d'une composition telle que définie selon la revendication 19 ou 20, comprenant en outre séparément iii) un solvant organique apolaire tel que défini selon l'une quelconque des revendications 3 à 10, en vue de son assemblage avec le scintillateur liquide et le composé supplémentaire.

**22.** Kit selon la revendication 21, comprenant en outre :

- un troisième compartiment contenant III) le solvant organique apolaire.

## Patentansprüche

**1.** Verfahren zur Flüssigszintillationsmessung, wobei das Verfahren die folgenden aufeinanderfolgenden Schritte umfasst:

a) ein Flüssigszintillator, umfassend N-(2-Ethylhexyl)-carbazol, und wobei die monomere Form von N-(2-Ethylhexyl)-carbazol spontan im physikochemischen Gleichgewicht mit der exciplexen Form ist, wird einem radioaktiven Material ausgesetzt, damit der Flüssigszintillator eine Radiolumineszenzstrahlung emittiert; und
b) die Radiolumineszenzstrahlung wird gemessen.

**2.** Verfahren zur Flüssigszintillationsmessung nach Anspruch 1, wobei der Flüssigszintillator aus N-(2-Ethylhexyl)-carbazol besteht.

**3.** Verfahren zur Flüssigszintillationsmessung nach Anspruch 1, wobei der Flüssigszintillator ein apolares organisches Lösungsmittel umfasst.

**4.** Verfahren zur Flüssigszintillationsmessung nach Anspruch 3, wobei der Flüssigszintillator eine derartige Menge

eines apolaren organischen Lösungsmittels umfasst, dass der Zentroid der Radiolumineszenzstrahlung auf einer Wellenlänge zwischen 380 nm und 450 nm zentriert ist.

**5.** Verfahren zur Flüssigszintillationsmessung nach Anspruch 3 oder 4, wobei der Flüssigszintillator einen Volumenprozentsatz von 0,1 % bis 75 % des apolaren organischen Lösungsmittels umfasst.

**6.** Verfahren zur Flüssigszintillationsmessung nach einem der Ansprüche 3 bis 5, wobei das apolare organische Lösungsmittel ein aromatisches Lösungsmittel, ein aliphatisches Lösungsmittel oder ihre Mischung ist.

**7.** Verfahren zur Flüssigszintillationsmessung nach Anspruch 6, wobei das aromatische Lösungsmittel ausgewählt wird aus Xylol, Toluol, Pseudocumen, Phenylxylyethan, Dedecylbenzol, Diisopropylnaphthalin, Isopropylbiphenyl, Benzol, Tetralin, ihrem/ihren flüssigen Isomer/en oder ihren Mischungen.

**8.** Verfahren zur Flüssigszintillationsmessung nach Anspruch 7, wobei das aromatische Lösungsmittel Xylol ist.

**9.** Verfahren zur Flüssigszintillationsmessung nach einem der Ansprüche 6 bis 8, wobei das aliphatische Lösungsmittel ausgewählt wird aus Pentan, Hexan, Cyclohexan, Heptan, Octan, Nonan, Decan, Undecan, Dodecan, einem Paraffinöl, Dioxan, Dichlormethan, Chloroform, Tetrachlorkohlenstoff, Acetonitril, ihrem/ihren Isomer/en oder ihren Mischungen.

**10.** Verfahren zur Flüssigszintillationsmessung nach Anspruch 9, wobei das aliphatische Lösungsmittel Cyclohexan oder Dichlormethan ist.

**11.** Verfahren zur Flüssigszintillationsmessung nach einem der vorhergehenden Ansprüche, wobei der Flüssigszintillator mindestens eine ergänzende Verbindung umfasst, die aus einem Neutronenabsorber, einem grenzflächenaktiven Stoff oder einem Extraktionsmittel ausgewählt wird.

**12.** Verfahren zur Flüssigszintillationsmessung nach Anspruch 11, wobei der Neutronenabsorber ausgewählt wird aus einem Organometallkomplex von Lithium, von Bor, von Cadmium, von Gadolinium oder einer Mischung dieser Komplexe.

**13.** Verfahren zur Flüssigszintillationsmessung nach Anspruch 11 oder 12, wobei der grenzflächenaktive Stoff ausgewählt wird aus Isooctylphenoxypolyethoxyethanol, einem Ester von Polyoxyethylensorbitan oder ihren Mischungen.

**14.** Verfahren zur Flüssigszintillationsmessung nach einem der Ansprüche 11 bis 13, wobei das Extraktionsmittel ausgewählt wird aus Di-2-ethylhexylphosphorsäure, Tributylphosphat, Tri-n-octylphosphin, einem Kronenether oder ihren Mischungen.

**15.** Verfahren zur Flüssigszintillationsmessung nach einem der vorhergehenden Ansprüche, wobei das radioaktive Material Gammastrahlen, Röntgenstrahlen, Betateilchen, Alphateilchen oder Neutronen emittiert.

**16.** Verfahren zur Flüssigszintillationsmessung nach einem der vorhergehenden Ansprüche, wobei das Messverfahren einen Schritt c) umfasst, in dem die Anwesenheit und/oder die Menge des radioaktiven Materials aus der Messung der Radiolumineszenzstrahlung gemäß Schritt b) bestimmt wird.

**17.** Verwendung eines Flüssigszintillators, wie in einem der Ansprüche 1 bis 14 definiert, als primärer Flüssigszintillator.

**18.** Flüssigszintillationszusammensetzung, umfassend i) einen Flüssigszintillator, wie in einem der Ansprüche 1 bis 10 definiert, und ii) eine ergänzende Verbindung, wie in einem der Ansprüche 11 bis 14 definiert.

**19.** Kit, welches bereit ist zur Herstellung einer Zusammensetzung, wie nach Anspruch 18 definiert, umfassend getrennt zum Zusammenführen i) den Flüssigszintillator, wie in einem der Ansprüche 1 bis 10 definiert, und ii) die ergänzende Verbindung, wie in einem der Ansprüche 11 bis 14 definiert.

**20.** Kit nach Anspruch 19, umfassend:

- ein erstes Abteil, enthaltend I) den Flüssigszintillator, umfassend N-(2-Ethylhexyl)-carbazol, und wobei die monomere Form von N-(2-Ethylhexyl)-carbazol spontan im physikochemischen Gleichgewicht mit der exciplexen Form ist;
- ein zweites Abteil, enthaltend II) die ergänzende Verbindung, ausgewählt aus einem Neutronenabsorber, einem grenzflächenaktiven Stoff oder einem Extraktionsmittel.

**21.** Kit, welches bereit ist zur Herstellung einer Zusammensetzung, wie nach Anspruch 19 oder 20 definiert, außerdem umfassend getrennt iii) ein apolares organisches Lösungsmittel, wie nach einem der Ansprüche 3 bis 10 definiert, zum Zusammenführen mit dem Flüssigszintillator und der ergänzenden Verbindung.

**22.** Kit nach Anspruch 21, außerdem umfassend:

- ein drittes Abteil, enthaltend III) das apolare organische Lösungsmittel.

## Claims

**1.** Liquid scintillation measurement method, the method comprising the following successive steps:

a) a liquid scintillator comprising *N*-(2-ethylhexyl)carbazole, and in which the monomer form of *N*-(2-ethylhexyl)carbazole is spontaneously in physicochemical equilibrium with the exciplex form, is exposed to a radioactive substance, in order for the liquid scintillator to emit radioluminescent radiation; and
b) the radioluminescent radiation is measured.

**2.** Liquid scintillation measurement method according to Claim 1, in which the liquid scintillator consists of *N*-(2-ethylhexyl)carbazole.

**3.** Liquid scintillation measurement method according to Claim 1, in which the liquid scintillator comprises a nonpolar organic solvent.

**4.** Liquid scintillation measurement method according to Claim 3, in which the liquid scintillator comprises an amount of nonpolar organic solvent such that the centroid of the radioluminescent radiation is centred at a wavelength comprised between 380 nm and 450 nm.

**5.** Liquid scintillation measurement method according to Claim 3 or 4, in which the liquid scintillator comprises, as percentage by volume, from 0.1% to 75% of the nonpolar organic solvent.

**6.** Liquid scintillation measurement method according to any one of Claims 3 to 5, in which the nonpolar organic solvent is an aromatic solvent, an aliphatic solvent or their mixture.

**7.** Liquid scintillation measurement method according to Claim 6, in which the aromatic solvent is chosen from xylene, toluene, pseudocumene, phenylxylylethane, dodecylbenzene, diisopropylnaphthalene, isopropylbiphenyl, benzene, tetralin, their liquid isomer(s) or their mixtures.

**8.** Liquid scintillation measurement method according to Claim 7, in which the aromatic solvent is xylene.

**9.** Liquid scintillation measurement method according to any one of Claims 6 to 8, in which the aliphatic solvent is chosen from pentane, hexane, cyclohexane, heptane, octane, nonane, decane, undecane, dodecane, paraffin oil, dioxane, dichloromethane, chloroform, carbon tetrachloride, acetonitrile, their isomer(s) or their mixtures.

**10.** Liquid scintillation measurement method according to Claim 9, in which the aliphatic solvent is cyclohexane or dichloromethane.

**11.** Liquid scintillation measurement method according to any one of the preceding claims, in which the liquid scintillator comprises at least one additional compound chosen from a neutron absorber, a surfactant or an extractant.

**12.** Liquid scintillation measurement method according to Claim 11, in which the neutron absorber is chosen from an organometallic lithium, boron, cadmium or gadolinium complex or a mixture of these complexes.

**13.** Liquid scintillation measurement method according to Claim 11 or 12, in which the surfactant is chosen from isooctylphenoxypolyethoxyethanol, a polyoxyethylene sorbitan ester or their mixtures.

**14.** Liquid scintillation measurement method according to any one of Claims 11 to 13, in which the extractant is chosen from di(2-ethylhexyl)phosphoric acid, tributyl phosphate, tri(n-octyl)phosphine, a crown ether or their mixtures.

**15.** Liquid scintillation measurement method according to any one of the preceding claims, in which the radioactive substance emits γ-rays, X-rays, β particles, α particles or neutrons.

**16.** Liquid scintillation measurement method according to any one of the preceding claims, in which the measurement method comprises a step c) in which the presence and/or the amount of the radioactive substance is determined from the measurement of the radioluminescent radiation according to step b) .

**17.** Use as primary liquid scintillator of a liquid scintillator as defined in any one of Claims 1 to 14.

**18.** Liquid scintillation composition comprising i) a liquid scintillator as defined in any one of Claims 1 to 10 and ii) an additional compound as defined in any one of Claims 11 to 14.

**19.** Ready-for-use kit for the manufacture of a composition as defined according to Claim 18, comprising separately, for the purpose of assembling them, i) the liquid scintillator as defined in any one of Claims 1 to 10 and ii) the additional compound as defined in any one of Claims 11 to 14.

**20.** Kit according to Claim 19, comprising:

- a first compartment containing I) the liquid scintillator comprising N-(2-ethylhexyl)carbazole, and in which the monomer form of N-(2-ethylhexyl)carbazole is spontaneously in physicochemical equilibrium with the exciplex form,
- a second compartment containing II) the additional compound chosen from a neutron absorber, a surfactant or an extractant.

**21.** Ready-for-use kit for the manufacture of a composition as defined according to Claim 19 or 20, additionally comprising separately iii) a nonpolar organic solvent as defined according to any one of Claims 3 to 10, for the purpose of assembling it with the liquid scintillator and the additional compound.

**22.** Kit according to Claim 21, additionally comprising:

- a third compartment containing III) the nonpolar organic solvent.

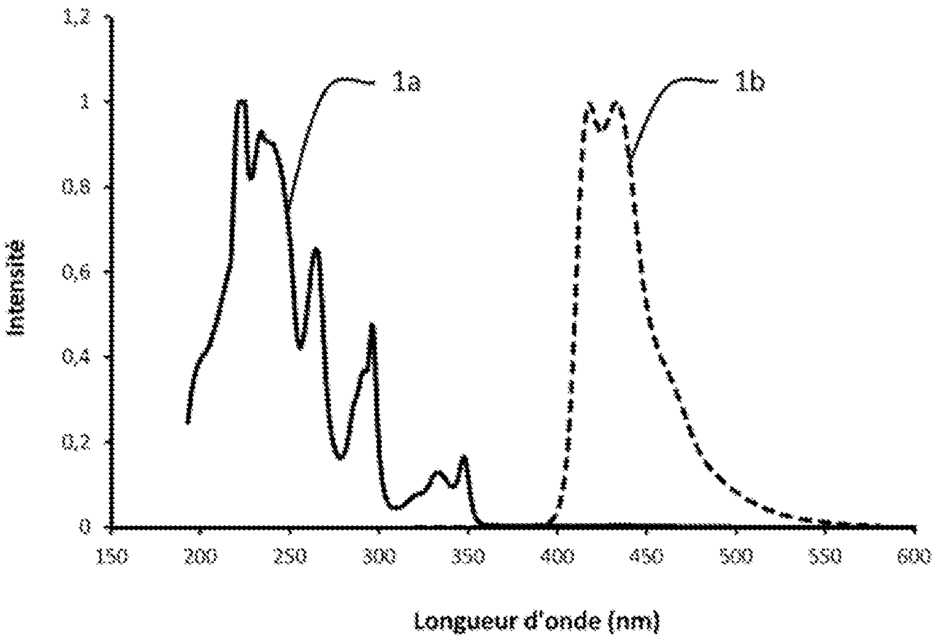
1,2
1
0,8
0,6
0,4
0,2
0
Intensité
1a
1b
150
200
250
300
350
400
450
500
550
600
Longueur d'onde (nm)

**FIG. 1**

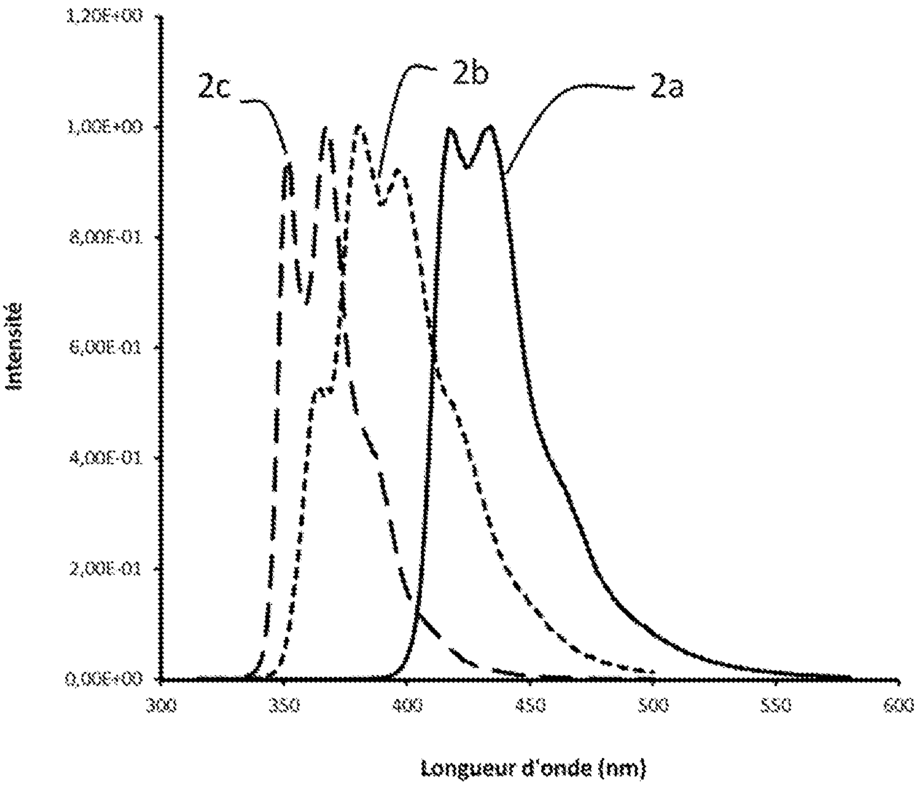
1,20E+00
1,00E+00
8,00E-01
6,00E-01
4,00E-01
2,00E-01
0,00E+00
Intensité
2c
2b
2a
300
350
400
450
500
550
600
Longueur d'onde (nm)

**FIG. 2**

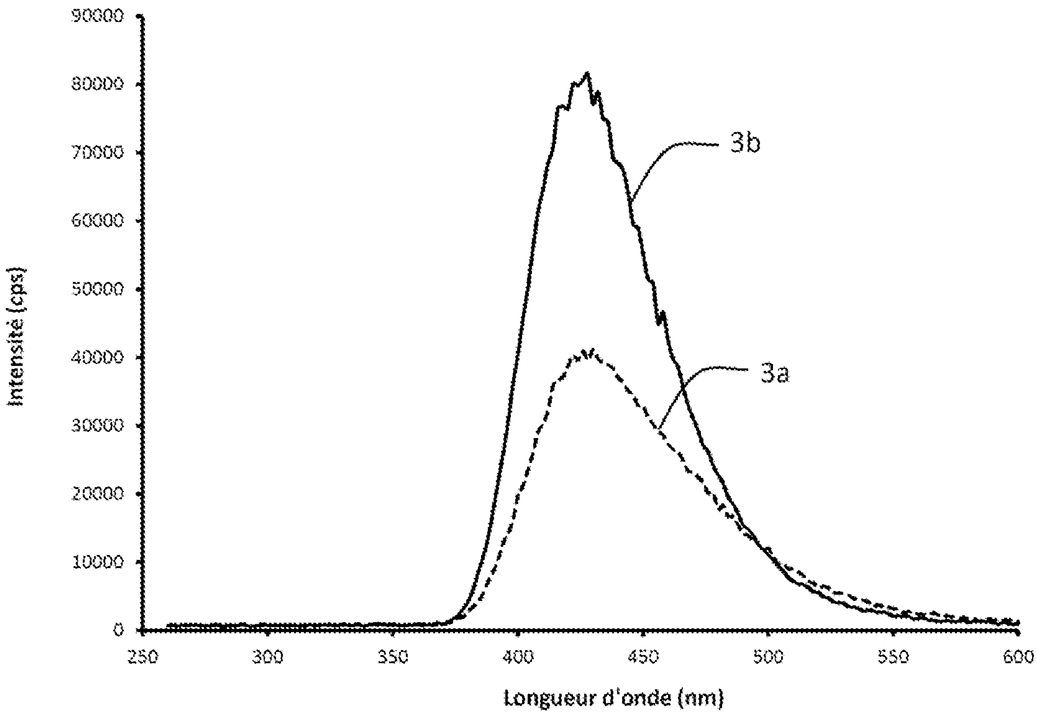
90000
80000
70000
60000
50000
40000
30000
20000
10000
0
Intensité (cps)
250
300
350
400
450
500
550
600
Longueur d'onde (nm)
3b
3a

FIG. 3

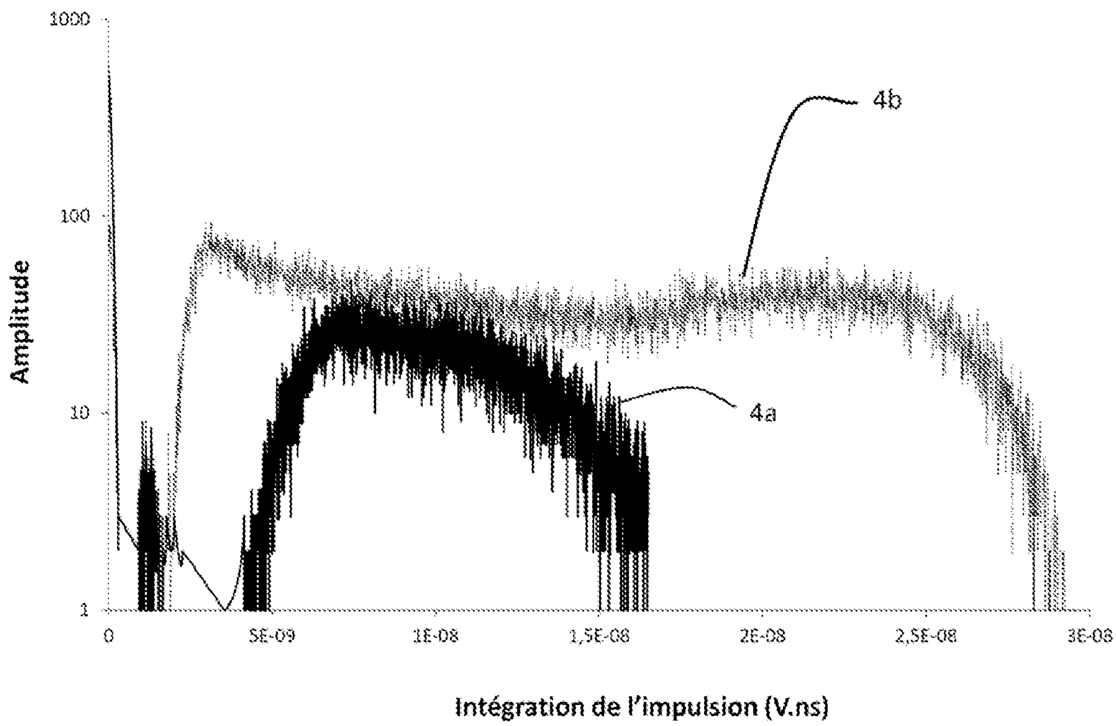
1000
100
10
1
Amplitude
0
5E-09
1E-08
1,5E-08
2E-08
2,5E-08
3E-08
Intégration de l'impulsion (V.ns)
4b
4a

FIG. 4

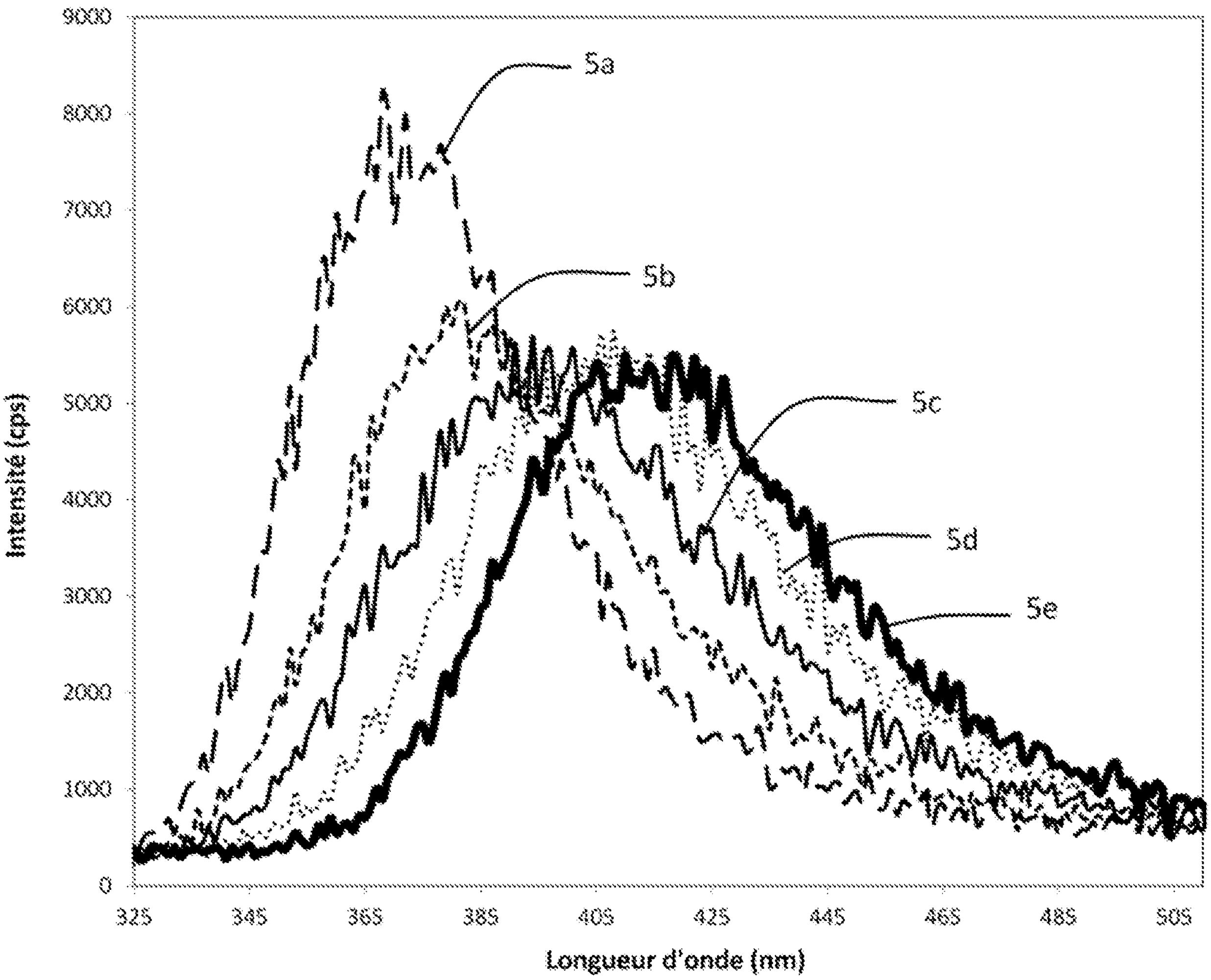
9000
8000
7000
6000
5000
4000
3000
2000
1000
0
Intensité (cps)
325
345
365
385
405
425
445
465
485
505
Longueur d'onde (nm)
5a
5b
5c
5d
5e

FIG. 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 2006046172 A


### Littérature non-brevet citée dans la description


- *Techniques de l'ingénieur, Mesures de radioactivité par scintillation liquide, Référence,* 10 Mars 2004, 2552
- **M. DALLA PALMA et al.** *Optical Materials,* 2015, vol. 42, 111-117